# EUROPÄISCHE PATENTSCHRIFT

(11) **EP 2 300 486 B1**
(45) Veröffentlichungstag und Bekanntmachung des Hinweises auf die Patenterteilung: **28.03.2012**
(21) Anmeldenummer: 09780269.8
(22) Anmeldetag: 07.07.2009
(51) Int. Cl.: C07F 7/18, C07F 7/08, C07F 7/20

(54) **VERFAHREN ZUR VERHINDERUNG DER POLYMERISATION VON UNGESÄTTIGTEN ORGANOSILICIUMVERBINDUNGEN**
METHOD FOR PREVENTING POLYMERIZATION OF UNSATURATED ORGANOSILICON COMPOUNDS
PROCÉDÉ DESTINÉ À EMPÊCHER LA POLYMÉRISATION DE COMPOSÉS D ORGANOSILICIUM INSATURÉS

(30) Priorität: 16.07.2008 DE 102008040475
(43) Veröffentlichungstag der Anmeldung: 30.03.2011
(73) Patentinhaber: Wacker Chemie AG, 81737 München (DE)
(72) Erfinder: ZICHE, Wolfgang, 84489 Burghausen (DE); STANJEK, Volker, 84539 Ampfing (DE)
(74) Vertreter: Fritz, Helmut
(86) Internationale Anmeldenummer: PCT/EP2009/058617
(87) Internationale Veröffentlichungsnummer: WO 2010/006963

(56) Entgegenhaltungen:
- DE-A1-102007 023 760

## Beschreibung

Die vorliegende Erfindung betrifft ein industrielles Verfahren zur Verhinderung der Polymerisation von ungesättigten Organosiliciumverbindungen bei deren Herstellung oder Handhabung.

Siliciumorganische Verbindungen mit ungesättigten organischen funktionellen Gruppen, wie z. B. Vinyl-, Acryl- oder Methacrylgruppen finden weitverbreitete Anwendung als Haftvermittler zwischen anorganischen und organischen Materialen, so z. B. in Schlichten für Glasfasern, als Quervernetzer in organischen Polymeren oder auch zur Behandlung von Füllstoffen.

Herstellungsverfahren für derartige Verbindungen umfassen z. B. die durch Metallverbindungen katalysierte Reaktion zwischen Silanen mit SiH-Bindungen und mehrfach ungesättigten organischen Verbindungen. Ein weiterer gängiger Weg ist eine Reaktion von Chloralkylsilanen mit Alkalimetall-(Meth)-Acrylaten. All diesen Prozessen ist gemeinsam, dass sie exotherm bei erhöhten Temperaturen ablaufen. Dadurch besteht während der Reaktion die Gefahr einer Polymerisation der Produkte über die ungesättigte organische Gruppe, wodurch Produkt verloren geht und verwendete Reaktionsapparaturen aufwendig gereinigt werden müssen.

Darüber hinaus werden die ungesättigten organische Gruppen tragenden Silane zumeist noch durch Destillation gereinigt, wobei durch die dazu notwendige thermische Belastung ebenfalls eine erhebliche Polymerisationsgefahr besteht. Schließlich besteht auch während der Lagerung dieser Verbindungen die Gefahr der Polymerisation.

Verschiedene Verfahren sind bekannt, um die Gefahr einer Polymerisation von siliziumorganischen Verbindungen mit ungesättigten organischen Gruppen zu minimieren. US 4,276,426 beschreibt z. B. die Synthese von 3-Methacryloxypropylsilanen aus Allylmethacrylat und verschiedenen Silanen mit SiH-Bindungen unter schnellem Umpumpen der Reaktionspartner in einem Schleifenreaktor, wodurch die Polymerisation verhindert werden kann.

Zahlreiche Verfahren zur Verhinderung der Polymerisation von ungesättigte organische Gruppen tragenden siliziumorganischen Verbindungen beinhalten die Verwendungen von so genannten Radikalpolymerisations-Inhibitoren: DE 11 83 503 beschreibt die Stabilisierung durch Zugabe von 50-500 ppm Hydroxyphenylverbindungen wie Hydrochinon oder Hydrochinonmonomethylether zusammen mit 0,5-10 Gewichtprozenten eines in Wasser und dem Silan löslichen Alkohols. In DE 22 38 295 wird die Verwendung von Chinonen zusammen mit den entsprechenden Enolen beschrieben. In US 4,563,538 wird die Stabilisierung der ungesättigten Organosiliciumverbindung durch 2,6-Di-tert.-butylbenzochinon beschrieben, während in US 4,722,807 eine Kombination von 2,6-Di-tert.-butylhydrochinon und Methanol Verwendung findet. Einen anderen Weg beschreibt US 4,894,398: Hier erfolgt die Stabilisierung der ungesättigten Organosiliciumverbindung durch Zugabe eines Hydroxylamins in ausreichender Menge. In DE 38 32 621 C1 wird die Kombination zweier unterschiedlicher Polymerisationsinhibitoren, bestehend aus einer Verbindung aus der Klasse von N,N'-disubstituierten p-Phenylendiaminen und einer Verbindung aus der Klasse der 2,6-Di-tert.-butyl-4-alkyl-phenole, beschrieben. US 4,780,555 beschreibt eine weitere Methode, um die Polymerisation von ungesättigten Organosiliciumverbindungen zu verhindern: Hierbei bewirkt die Kombination von Phenothiazin zusammen mit einer mindestens 0,1 Vol% Sauerstoff enthaltenden Gasatmosphäre, welche mit der ungesättigten Organosiliciumverbindung in Kontakt gebracht wird, eine Stabilisierung. Ein Nachteil dieses Verfahrens ist die Notwendigkeit der Anwesenheit einer definierten Menge Sauerstoff, die insbesondere während einer Destillation technisch aufwendig ist und des Weiteren sicherheitstechnisch als nachteilig anzusehen ist.

Eine weitere Kombination von Verbindungen, die in US 5,145,979 als stabilisierend beschrieben wird, ist eine Mischung aus einem sterisch gehinderten Phenol, einem aromatischen Amin und einem Alkylamin. Weitere Verbindungen, die zur Stabilisierung von ungesättigte organische funktionelle Gruppen tragenden siliziumorganischen Verbindungen eingesetzt werden, sind zum Beispiel spezielle 2,6-Dialkyl-4-N,N-dialkylaminomethylphenole, allein oder in Kombination mit anderen stabilisierend wirkenden Verbindungen (EP 0 520 477 B1), tertiäre Amine (DE 44 30 729 A1), nicht aromatische, stabile freie Radikale wie 2,2,6,6-Tetramethylpiperidinyloxid ("TEMPO", US 5,616,753, US 5,550,272), N,N'-disubstituierte p-Chinodiimine (EP 0 708 081 B1) Dialkylamide ungesättigter organischer Säuren (z. B. in EP 0 845 471 A2), Zinksalze von 2-Mercaptobenzothiazol oder Dimethyldithiocarbamat (z. B. in EP 0 845 465 A2).

Den beschriebenen Verfahren gemeinsam ist der Nachteil, dass relativ große Mengen an stabilisierender Verbindung zugesetzt werden muss, 50-2000 ppm an Gewicht bezogen auf das Gewicht des Silans, dass diese Verbindungen oft recht teuer sind und dass die beschriebenen Verfahren oftmals - wie ein in Berührung bringen mit einem Sauerstoff enthaltenden Gasgemisch - sicherheitstechnisch als kritisch zu beurteilen sind. Darüber hinaus besteht bei den meisten beschriebenen Verbindungen trotz eines auf ungesättigte Organosiliciumverbindungen ausgeübten stabilisierenden Effektes eine Restgefahr, dass die ungesättigte Organosiliciumverbindung polymerisiert und dadurch verloren wird. Ein weiterer Nachteil schließlich besteht in der Tatsache, dass es sich bei den meisten als Polymerisationsinhibitoren beschriebenen Verbindungen um Feststoffe handelt, deren Dosierung aufwendige Arbeitsschritte oder Apparaturen erfordert.

US 6,441,228B2 beschreibt die Verwendung molybdänhaltiger Stahllegierungen in der Synthese von Methacrylsäure. WO 2005/40084 beschreibt die Verwendung kupferhaltiger Legierungen für die Herstellung, Aufreinigung, Handhabung oder Lagerung ethylenisch ungesättigter Verbindungen. Nachteilig ist die Verwendung unüblicher Legierungen.

In DE 10 2007 023 760 A1 ist ein Verfahren zur kontinuierlichen industriellen Umsetzung von Methacrylsäureallylester mit einer HSi-Verbindung in Gegenwart eines Katalysators beschrieben. Die Umsetzung kann in mit Füllkörpern aus Keramik, Glas oder Kunststoff gefüllten Vorreaktoren und den Vorreaktoren nachgeschalteten Quarzglaskapillaren durchgeführt werden.

Aufgabe der vorliegenden Erfindung war deshalb die Entwicklung eines Verfahrens zur Herstellung, Aufreinigung, Handhabung oder Lagerung von ungesättigten Organosiliciumverbindungen, das sich für eine großtechnische Produktion eignet und die Nachteile des Standes der Technik nicht aufweist.

Gegenstand der Erfindung ist ein

Verfahren zur Verhinderung der Polymerisation bei der Herstellung oder Handhabung von ungesättigten Organosiliciumverbindungen (S) der allgemeinen Formel (2)

H₂C=C(R¹)C(O)O-(R²)_{y}-Si(R³)_{z}(OR⁴)_{3-z} (2)

ausgehend von einem Halogenalkylsilan der allgemeinen Formel (3)

X-(R²)_{y}-Si(R³)_{z}(OR⁴)_{3-z} (3),

und einem Salz eines (Meth-)Acrylates, das Anionen der allgemeinen Formel (4)

H₂C=C(R¹)C(O)O⁻ (4),

aufweist, in Anwesenheit von Stabilisatoren, wobei **X** ein Halogenatom darstellt,
- **R¹**: ein Wasserstoffatom oder einen linearen oder verzweigten Kohlenwasserstoffrest mit 1-10 Kohlenstoffatomen darstellt,
- **R²**: einen linearen oder verzweigten Kohlenwasserstoffrest mit 1-40 Kohlenstoffatomen darstellt, der ein oder mehrere Heteroatome, ausgewählt aus den Elementen Stickstoff, Sauerstoff, Schwefel oder Phosphor, enthalten kann,
- **R³** und **R⁴**: lineare oder verzweigte Kohlenwasserstoffreste mit 1-10 Kohlenstoffatomen bedeuten,
- **y**: die Werte 0 oder 1 und
- **z**: die Werte 0, 1 oder 2 annehmen können,
wobei mindestens die Synthese der

Organosiliciumverbindungen (S) und die destillative Aufreinigung der Organosiliciumverbindungen (S) in einer technischen Anlage (A) durchgeführt wird, deren die Organosiliciumverbindungen (S) berührenden Oberflächen zu mindestens 70% aus einem eisenfreien Werkstoff bestehen, wobei ein Werkstoff als eisenfrei bezeichnet wird, wenn er weniger als 1 Gew.-% Eisen enthält,
wobei die technische Anlage (A) entweder eine Anlage für einen Batchprozess mit einem Füllvolumen von mindestens 200 1 oder eine Anlage für einen kontinuierlichen Prozess mit einem Durchsatz von mindestens 15 l/h darstellt.

Beim Einsatz von eisenfreien Werkstoffen wird die Polymerisation der Organosiliciumverbindungen (S) bei deren Herstellung oder Handhabung stark verlangsamt oder vollständig verhindert.

Das Verfahren verhindert die Polymerisation bei allen beliebigen Herstellungs- oder Handhabungsschritten, wie Synthese; Aufreinigung, wie Abtrennung eines Feststoffes von der Organosiliciumverbindung (S) durch Filtration, destillative Aufreinigung der Organosiliciumverbindung (S) durch Abtrennung leichtersiedender Verunreinigungen oder destillative Aufreinigung der Organosiliciumverbindung (S) durch Destillation der Organosiliciumverbindung (S) selbst; Transport und Lagerung; und Weiterverarbeitung zu Folgeprodukten.

Bevorzugt bestehen die die Organosiliciumverbindung (S) berührenden Oberflächen der Anlage (A) zu mindestens 90 Gew.-% und besonders bevorzugt zu 99 Gew.-% aus einem eisenfreien Werkstoff. Der Begriff eisenfrei bedeutet dabei, dass der jeweilige Werkstoff weniger als 1 Gew.-% Eisen, vorzugsweise weniger als 0,1 Gew.-% und besonders bevorzugt weniger als 0,01 Gew.-%, insbesondere weniger als 0,001 Gew.-%, Eisen enthält.

Beispiele für eisenfreie Werkstoff sind Glas, Emaille, Nickel, Kupfer, Titan, Zirkon, Niob, Tantal und ihre Legierungen mit einem Eisengehalt < 0,5 Gew.-%, Kunststoffe wie PTFE, Graphit, Oxidkeramiken wie Aluminiumoxid, Siliciumcarbid und -nitrid. Bevorzugt sind metallfreie Werkstoffe wie Glas, Emaille, Kunststoffe wie PTFE, Graphit, Oxidkeramiken wie Aluminiumoxid, Siliciumcarbid und -nitrid; besonders bevorzugt sind Glas, Emaille, Graphit, Oxidkeramiken wie Aluminiumoxid, Siliciumcarbid und -nitrid, insbesonders Glas, Emaille und Graphit.

Diese Synthese wird häufig in Anwesenheit eines Phasentransferkatalysators durchgeführt. Beispiele für derartige Phasentransferkatalysatoren sind Tetraorganoammonium- oder Tetraorganophosphoniumsalze. Die Reaktion wird vorzugsweise bei Temperaturen zwischen 60 und 150 °C und besonders bevorzugt bei Temperaturen zwischen 70 und 120 °C durchgeführt. Die als Nebenprodukt entstehenden Halogensalze sowie gegebenenfalls vorhandene Reste der (Meth-)Acrylsalze mit Anionen der allgemeinen Formel (4) werden vorzugsweise durch eine Filtration abgetrennt. Anschließend wird das Produkt wird bevorzugt destillativ aufgereinigt, wobei einer oder auch mehrere Reinigungsschritte durchgeführt werden. Vorzugsweise werden zuerst leichtsiedende Verunreinigungen destillativ abgetrennt. Dies geschieht bevorzugt bei reduziertem Druck und Temperaturen zwischen 20 und 120 °C, bevorzugt zwischen 40 und 80 °C. Anschließend wird gegebenenfalls das Silan (S) der allgemeinen Formel (2) selbst destilliert, wobei auch dieser Destillationsschritt vorzugsweise bei reduziertem Druck durchgeführt wird, so dass die Sumpftemperatur während der Destillation unter 200 °C, vorzugsweise unter 150 °C und besonders bevorzugt unter 130 °C liegt.

In den allgemeinen Formeln (2) bis (4) steht **R¹** vorzugsweise für Wasserstoffatom oder Alkylrest mit 1-3 Kohlenstoffatomen, insbesondere CH₃; **R²** vorzugsweise für einen Alkylrest mit 1-6 Kohlenstoffatomen, insbesondere CH₂- oder (CH₂)₃-Gruppe; **R³** bevorzugt für CH₃ oder Ethylreste; und **R⁴** vorzugsweise für Methyl-, Ethyl-, Propyl- oder Isopropylreste, wobei Methyl- und Ethylreste besonders bevorzugt werden. X stellt vorzugsweise Chlor oder Brom, besonders bevorzugt Chlor dar.

Beim der Herstellung oder Handhabung der ungesättigten Organosiliciumverbindungen (S) können herkömmliche Stabilisatoren, wie z. B. Hydrochinon, Hydrochinonmonomethylether, Phenothiazin, N,N-disubstituierte Aminomethylenplenole und/oder Sauerstoff anwesend sein.

Beispiele für Anlagen (A) zur Herstellung oder Handhabung ungesättigter Organosiliciumverbindungen (S) der allgemeinen Formel (2) sind Rührkessel, Rohrreaktoren, Destillationskolonnen und deren Einbauten und Packungen, Dünnschichtverdampfer, Fallfilmverdampfer, Kurzwegdestillationen inklusive deren Einbauten wie z.B. Wischer in Dünnschichtverdampfern, aber auch Wärmetauscher und Tanks.

Bei einer bevorzugten Ausführungsform der Erfindung handelt es sich bei den Anlagen (A) um Rührkessel für eine batchweise Synthese und/oder Destillation der Organosiliciumverbindungen (S) mit einem Füllvolumen von mindestens 200 1, wobei Füllvolumen von mindestens 500 1 bzw, von mindestens 1000 1 besonders bevorzugt werden.

Bei einer weiteren bevorzugten Ausführungsform der Erfindung handelt es sich bei den Anlagen (A) um Reaktoren für eine kontinuierliche Synthese mit einem Durchsatz von mindestens 15 l/h, wobei Durchsätze von mindestens 30 l/h bzw. von mindestens 100 l/h besonders bevorzugt werden.

Bei einer weiteren bevorzugten Ausführungsform der Erfindung handelt es sich bei den Anlagen (A) um Dünnschichtverdampfer, Fallfilmverdampfer oder Kurzwegdestillationen mit einem Durchsatz von mindestens 15 l/h, wobei Durchsätze von mindestens 30 l/h bzw. von mindestens 50 l/h besonders bevorzugt werden.

Bevorzugt werden diejenigen Verfahrensschritte in Anlagen (A) ausgeführt, bei denen die ungesättigten Organosiliciumverbindungen (S) der allgemeinen Formel (2) thermisch belastet werden, wie z.B. der Synthese und der Aufreinigung durch Destillation. Besonders bevorzugt wird die destillative Aufreinigung in Anlagen (A) ausgeführt. Vorzugsweise wird dabei eine Anlage (A) für eine Batchdestillation, besonders bevorzugt ein Dünnschicht-, Fallfilm- oder Kurzwegverdampfer eingesetzt. Der Dünnschicht-, Fallfilm- oder Kurzwegverdampfer kann dabei einstufig sein, z.B. wenn für eine hinreichende Produktreinigung lediglich die Leichtsieder entfernt werden müssen, oder aber in einem zweistufigen Prozess erst die Leichtsieder entfernt werden und im zweiten Verdampferdurchlauf das Produkt selbst destilliert wird. Ebenso kann auch ein zweistufiger Dünnschicht-, Fallfilm- oder Kurzwegverdampfer verwendet werden, wobei in der ersten Stufe die Leichtsieder entfernt werden und in der zweiten Stufe das Produkt selbst destilliert wird. In diesem Fall stellt jede Dünnschichterstufe für sich eine Anlage (A) im Sinne der vorliegenden Erfindung dar. In einem bevorzugten Verfahren besteht nur eine der beiden Dünnschichterstufen aus einer Anlage (A), vorzugsweise handelt es sich jedoch bei beiden Dünnschichterstufen um Anlagen (A).

Bei einem bevorzugten Verfahren werden mindestens zwei der Verfahrensschritte ausgewählt aus Synthese der Organosiliciumverbindungen (S), Abtrennung eines Feststoffes von den Organosiliciumverbindungen (S) durch Filtration, destillative Aufreinigung der Organosiliciumverbindungen (S) durch Abtrennung leichtersiedender Verunreinigungen oder destillative Aufreinigung der organosiliciumverbindungen (S) durch Destillation der Organosiliciumverbindungen (S) selbst in einer technischen Anlage (A) mit den oben genannten Eigenschaften durchgeführt. Besonders bevorzugt werden sämtliche Verfahrensschritte in derartigen Anlagen (A) durchgeführt.

Beispiele für ungesättigte Organosiliciumverbindungen (S) sind Acrylsilane, wie z. B. Acryloxymethyltrimethoxysilan, Acryloxymethyltriethoxysilan, Acryloxymethyltriphenyloxysilan, Acryloxymethyltriisopropoxysilan, Acryloxymethyltris(2-methoxyethoxy)silan, Acryloxymethyl(methyl)dimethoxysilan, Acryloxymethyl(methyl)diethoxysilan, Acryloxymethyl(methyl)diphenyloxysilan, Acryloxymethyl(methyl)diisopropoxysilan, Acryloxymethyl(methyl)bis(2-methoxyethoxy)silan, Acryloxymethyl(dimethyl)methoxysilan, Acryloxymethyl(dimethyl)ethoxysilan, Acryloxymethyl(dimethyl)phenyloxysilan, Acryloxymethyl(dimethyl)isopropoxysilan, Acryloxymethyl(dimethyl)(2-methoxyethoxy)silan, 3-Acryloxypropyltrimethoxysilan, 3-Acryloxypropyltriethoxysilan, 3-Acryloxypropyltriphenyloxysilan, 3-Acryloxypropyltriisopropoxysilan, 3-Acryloxypropyltris(2-methoxyethoxy)silan, 3-Acryloxypropyl(methyl)dimethoxysilan, 3-Acryloxypropyl(methyl)diethoxysilan, 3-Acryloxypropyl(methyl)diphenyloxysilan, 3-Acryloxypropyl(methyl)diisopropoxysilan, 3-Acryloxypropyl(methyl)bis(2-methoxyethoxy)silan, 3-Acryloxypropyl(dimethyl)methoxysilan, 3-Acryloxypropyl(dimethyl)ethoxysilan, 3-Acryloxypropyl(dimethyl)phenyloxysilan, 3-Acryloxypropyl(dimethyl)isopropoxysilan, 3-Acryloxypropyl(dimethyl)(2-methoxyethoxy)silan oder auch Methacrylsilane wie z. B. Methacryloxymethyltrimethoxysilan, Methacryloxymethyltriethoxysilan, Methacryloxymethyltriphenyloxysilan, Methacryloxymethyltriisopropoxysilan, Methacryloxymethyltris(2-methoxyethoxy)silan, Methacryloxymethyl(methyl)dimethoxysilan, Methacryloxymethyl(methyl)diethoxysilan, Methacryloxymethyl(methyl)diphenyloxysilan, Methacryloxymethyl(methyl)diisopropoxysilan, Methacryloxymethyl(methyl)bis(2-methoxyethoxy)silan, Methacryloxymethyl(dimethyl)methoxysilan, Methacryloxymethyl(dimethyl)ethoxysilan, Methacryloxymethyl(dimethyl)phenyloxysilan, Methacryloxymethyl(dimethyl)isopropoxysilan, Methacryloxymethyl(dimethyl)(2-methoxyethoxy)silan, 3-Methacryloxypropyltrimethoxysilan, 3-Methacryloxypropyltriethoxysilan, 3-Methacryloxypropyltriphenyloxysilan, 3-Methacryloxypropyltriisopropoxysilan, 3-Methacryloxypropyltris(2-methoxyethoxy)silan, 3-Methacryloxypropyl(methyl)dimethoxysilan, 3-Methacryloxypropyl(methyl)diethoxysilan, 3-Methacryloxypropyl(methyl)diphenyloxysilan, 3-Methacryloxypropyl(methyl)diisopropoxysilan, 3-Methacryloxypropyl(methyl)bis(2-methoxyethoxy)silan, 3-Methacryloxypropyl(dimethyl)methoxysilan, 3-Methacryloxypropyl(dimethyl)ethoxysilan, 3-Methacryloxypropyl(dimethyl)phenyloxysilan, 3-Methacryloxypropyl(dimethyl)isopropoxysilan, 3-Methacryloxypropyl(dimethyl)(2-methoxyethoxy)silan.

Beispiele für besonders bevorzugte ungesättigte Organosiliciumverbindungen (S) der allgemeinen Formel (2) sind solche, bei denen **R²** für eine Methylengruppe steht. Diese Silane zeichnen sich oftmals durch eine besonders hohe Reaktivität und - damit verbunden - durch eine besonders hohe Polymerisationsneigung aus. Insbesondere bevorzugt sind: Acryloxymethyltrimethoxysilan, Acryloxymethyltriethoxysilan, Acryloxymethyl(methyl)dimethoxysilan, Acryloxymethyl(methyl)diethoxysilan, Acryloxymethyl(dimethyl)methoxysilan, Acryloxymethyl(dimethyl)ethoxysilan, Methacryloxymethyltrimethoxysilan, Methacryloxymethyltriethoxysilan, Methacryloxymethyl(methyl)dimethoxysilan, Methacryloxymethyl(methyl)diethoxysilan, Methacryloxymethyl(dimethyl)methoxysilan und Methacryloxymethyl(dimethyl)ethoxysilan.

Alle vorstehenden Symbole der vorstehenden Formeln weisen ihre Bedeutungen jeweils unabhängig voneinander auf. In allen Formeln ist das Siliziumatom vierwertig.

In den folgenden Beispielen und Vergleichsbeispielen sind, falls jeweils nicht anders angegeben, alle Mengen- und Prozentangaben auf das Gewicht bezogen und sämtliche Umsetzungen werden bei einem Druck von 0,10 MPa (abs.) und einer Temperatur von 20°C durchgeführt.

BHT bedeutet Butylhydroxytoluol (3,5-Di-tert-butyl-4-hydroxytoluol).

### Vergleichsbeispiel 1:

Ein mit 200 ppm BHT und 200 ppm Phenothiazin stabilisierter Rohansatz von Methacryloxymethyl-dimethoxymethylsilan (enthält 3500 ppm KOH) wurde an Luft bei 150 °C in einem Glaskolben in Gegenwart von Edelstahlwolle erhitzt. Nach 60 min gelierte das Produkt.

### Beispiel 2:

Ein mit 200 ppm BHT und 200 ppm Phenothiazin stabilisierter Rohansatz von Methacryloxymethyl-dimethoxymethylsilan (enthält 3500 ppm KOH) wurde an Luft bei 150 °C in einem Glaskolben in Abwesenheit von Edelstahlwolle erhitzt. Nach 180 min gelierte das Produkt.

### Vergleichsbeispiel 3:

Ein mit 200 ppm BHT und 200 ppm Phenothiazin stabilisierter Rohansatz von Methacryloxymethyl-dimethoxymethylsilan (neutralisiert mit Methansulfonsäure) wurde an Luft bei 150 °C in einem Glaskolben in Gegenwart von Edelstahlwolle erhitzt. Nach 2 h 20 min gelierte das Produkt.

### Vergleichsbeispiel 4:

Ein mit 200 ppm BHT und 200 ppm Phenothiazin stabilisierter Rohansatz von Methacryloxymethyl-dimethoxymethylsilan (neutralisiert mit Phosphorsäure) wurde an Luft bei 150 °C in einem Glaskolben in Gegenwart von Edelstahlwolle erhitzt. Nach 6 h gelierte das Produkt.

### Beispiel 5:

Ein mit 200 ppm BHT und 200 ppm Phenothiazin stabilisierter Rohansatz von Methacryloxymethyl-dimethoxymethylsilan (neutralisiert mit Methansulfonsäure) wurde an Luft bei 150 °C in einem Glaskolben in Abwesenheit von Edelstahlwolle erhitzt. Nach 7 h gelierte das Produkt.

### Vergleichsbeispiel 6:

Ein mit 200 ppm BHT, 200 ppm Phenothiazin und 200 ppm Kupferacetylacetonat stabilisierter Rohansatz von Methacryloxymethyl-dimethoxymethylsilan (neutralisiert mit Phosphorsäure) wurde an Luft in einem Glaskolben in Gegenwart von Edelstahlwolle erhitzt. Beim Aufheizen auf 120°C gelierte das Produkt.

Diese labormaßstäblichen Versuche zeigen den Einfluss eines eisenhaltigen Werkstoffs auf die Stabilität.

### Beispiel 7: Produktion Emaillekessel

Ein Rohansatz von Methacryloxymethyl-dimethoxymethylsilan wird nach DE 101,18,489 C1 in einem emaillierten Rührwerk aus 200 kg Chlormethyldimethoxymethylsilan und Kaliummethacrylat hergestellt.

Auf Polymerbildung wird wie folgt geprüft:
1,5 ml Methacrylsilan werden in einem 20 ml-Schnappdeckelglas vorgelegt, dazu werden dann 6 ml Isohexan gegeben und das Gemisch mit 6 ml Wasser unterschichtet. Das Glas wird verschlossen und geschüttelt. Nach der Phasentrennung bleibt die zweiphasige Lösung klar.
3 l des Rohansatzes werden in einer Glaskurzwegdestillation (Typ) (80°C, 0,2 mbar) gereinigt. Der Sumpfablauf ist homogen und gering viskos.

### Vergleichsbeispiel 8: Produktion Stahlkessel

Ein Rohansatz von Methacryloxymethyl-dimethoxymethylsilan wird nach DE 101,18,489 C1 in einem nichtemaillierten Rührwerk aus VA-Stahl aus 200 kg Chlormethyldimethoxymethylsilan und Kaliummethacrylat hergestellt.

1,5 ml Methacrylsilan werden in einem 20 ml-Schnappdeckelglas vorgelegt, dazu werden dann 6 ml Isohexan gegeben und das Gemisch mit 6 ml Wasser unterschichtet. Das Glas wird verschlossen und geschüttelt. Nach der Phasentrennung bildet sich an der Grenzfläche der zwei Phasen ein Polymerklumpen. 3 1 des Rohansatzes werden in einer Glaskurzwegdestillation (Typ) (80°C, 0,2 mbar) gereinigt. Der Sumpfablauf weist gelartige Klumpen auf und ist deutlich viskos.

### Vergleichsbeispiel 9: Destillation mit Stahl-Kurzwegdestillation

Der Rohansatz aus Beispiel 7 wird über eine zweistufige Kurzwegdestillation (VA-Stahl mit Graphit/PTFE-Wischern, Verdampferfläche 0,25 m², Temperatur 80°C, Vakuum 0,2 mbar, Durchsatz 25 kg/h) destilliert. Nach 60 min tritt vermehrt Polymer auf, so dass die Produktion abgebrochen wird.

### Beispiel 10: Destillation mit Glas-Kurzwegdestillation

Der Rohansatz aus Beispiel 7 wird über eine einstufige Kurzwegdestillation aus Glas (QVF (Mainz, Deutschland), Verdampferfläche 0,6 m², Temperatur 120°C, Vakuum 13 mbar, Durchsatz 24 kg/h) destilliert. Das Produkt kann ohne die Bildung von Polymeren destilliert werden.

## Patentansprüche

1. Verfahren zur Verhinderung der Polymerisation bei der Herstellung oder Handhabung von ungesättigten Organosiliciumverbindungen (S) der allgemeinen Formel (2)
H₂C=C(R¹)C(O)O-(R²)_{y}-Si(R³)_{z}(OR⁴)_{3-z} (2)
ausgehend von einem Halogenalkylsilan der allgemeinen Formel (3)
X-(R²)_{y}-Si(R³)_{z}(OR⁴)_{3-z} (3),
und einem Salz eines (Meth-)Acrylates, das Anionen der allgemeinen Formel (4)
H₂C=C(R¹)C(O)O⁻ (4),
aufweist, in Anwesenheit von Stabilisatoren,
wobei **X** ein Halogenatom darstellt,
**R¹** ein Wasserstoffatom oder einen linearen oder verzweigten Kohlenwasserstoffrest mit 1-10 Kohlenstoffatomen darstellt,
**R²** einen linearen oder verzweigten Kohlenwasserstoffrest mit 1-40 Kohlenstoffatomen darstellt, der ein oder mehrere Heteroatome, ausgewählt aus den Elementen Stickstoff, Sauerstoff, Schwefel oder Phosphor, enthalten kann,
**R³** und **R⁴** lineare oder verzweigte Kohlenwasserstoffreste mit 1-10 Kohlenstoffatomen bedeuten,
**y** die Werte 0 oder 1 und
**z** die Werte 0, 1 oder 2 annehmen können,
wobei mindestens die Synthese der
Organosiliciumverbindungen (S) und die destillative Aufreinigung der Organosiliciumverbindungen (S) in einer technischen Anlage (A) durchgeführt wird, deren die Organosiliciumverbindungen (S) berührenden Oberflächen zu mindestens 70% aus einem eisenfreien Werkstoff bestehen, wobei ein Werkstoff als eisenfrei bezeichnet wird, wenn er weniger als 1 Gew.-% Eisen enthält,
wobei die technische Anlage (A) entweder eine Anlage für einen Batchprozess mit einem Füllvolumen von mindestens 200 1 oder eine Anlage für einen kontinuierlichen Prozess mit einem Durchsatz von mindestens 15 l/h darstellt.

2. Verfahren nach Anspruch 1, bei dem die die Organosiliciumverbindung (S) berührenden Oberflächen der Anlage (A) zu mindestens 99 % aus einem eisenfreien Werkstoff bestehen, wobei ein Werkstoff als eisenfrei bezeichnet wird, wenn er weniger als 0,1 Gew.-% Eisen enthält.

3. Verfahren nach Anspruch 1 oder 2, bei dem der eisenfreie Werkstoff ausgewählt wird aus Glas, Emaille, Kunststoff, Graphit, Oxidkeramiken, Siliciumcarbid und -nitrid.

4. Verfahren nach Anspruch 1 bis 3, bei dem R¹ Wasserstoffatom oder CH₃ bedeutet.

5. Verfahren nach Anspruch 1 bis 4, bei dem R² eine CH₂- oder (CH₂)₃-Gruppe bedeutet.

6. Verfahren nach Anspruch 1 bis 5, bei dem R³ für Methyl- oder Ethylrest bedeutet.

7. Verfahren nach Anspruch 1 bis 6, bei dem **R⁴** Methyl- oder Ethylrest bedeutet.

8. Verfahren nach Anspruch 1 bis 7, wobei die technische Anlage (A) einen Dünnschichtverdampfer, Fallfilmverdampfer oder Kurzwegdestillationen mit einem Durchsatz von mindestens 15 l/h darstellt.

9. Verfahren nach Anspruch 1 bis 8, wobei die technische Anlage (A) entweder eine Anlage für einen Batchprozess mit einem Füllvolumen von mindestens 1000 1 oder eine Anlage für einen kontinuierlichen Prozess mit einem Durchsatz von mindestens 100 l/h darstellt.

10. Verfahren nach Anspruch 1 bis 9, wobei sämtliche Verfahrensschritte in Anlagen (A) durchgeführt werden.

## Claims

1. Method of preventing polymerization in the preparation or handling of unsaturated organosilicon compounds (S) of the general formula (2)
H₂C=C(R¹)C(O)O-(R²)_{y}-Si(R³)_{z}(OR⁴)_{3-z} (2)
which are prepared from a haloalkylsilane of the general formula (3)
X-(R²)_{y}-Si(R³)_{z}(OR⁴)_{3-z} (3)
and a salt of a (meth)acrylate having anions of the general formula (4)
H₂C=C(R¹)C(O)O⁻ (4)
in the presence of stabilizers,
where **X** is a halogen atom,
**R¹** is a hydrogen atom or a linear or branched hydrocarbon radical having 1-10 carbon atoms,
**R²** is a linear or branched hydrocarbon radical which has 1-40 carbon atoms and may contain one or more heteroatoms selected from among the elements nitrogen, oxygen, sulfur and phosphorus,
**R³** and **R⁴** are linear or branched hydrocarbon radicals having 1-10 carbon atoms,
**y** can be 0 or 1 and
z can be 0, 1 or 2,
wherein at least the synthesis of the organosilicon compounds (S) and the distillative purification of the organosilicon compounds (S) is carried out in an industrial apparatus (A) whose surfaces which come into contact with the organosilicon compounds (S) comprise at least 70% of an iron-free material, where a material is designated as iron-free when it contains less than 1% by weight of iron,
and the industrial apparatus (A) is either an apparatus for a batch process having a fill volume of at least 200 1 or an apparatus for a continuous process having a throughput of at least 15 l/h.

2. Method according to Claim 1, wherein the surfaces of the apparatus (A) which come into contact with the organosilicon compound (S) comprise at least 99% of an iron-free material, where a material is designated as iron-free when it contains less than 0.1% by weight of iron.

3. Method according to Claim 1 or 2, wherein the iron-free material is selected from among glass, enamels, plastic, graphite, oxide ceramics, silicon carbide and silicon nitride.

4. Method according to any of Claims 1 to 3, wherein **R**¹ is a hydrogen atom or CH₃.

5. Method according to any of Claims 1 to 4, wherein **R**² is a CH₂ or (CH₂)₃ group.

6. Method according to any of Claims 1 to 5, wherein **R³** is a methyl or ethyl radical.

7. Method according to any of Claims 1 to 6, wherein **R⁴** is a methyl or ethyl radical.

8. Method according to any of Claims 1 to 7, wherein the industrial apparatus (A) is a thin film evaporator, falling film evaporator or short path distillation having a throughput of at least 15 l/h.

9. Method according to any of Claims 1 to 8, wherein the industrial apparatus (A) is either an apparatus for a batch process having a fill volume of at least 1000 1 or an apparatus for a continuous process having a throughput of at least 100 l/h.

10. Method according to any of Claims 1 to 9, wherein all process steps are carried out in apparatuses (A).

## Revendications

1. Procédé pour empêcher la polymérisation lors de la préparation ou de la manipulation de composés organosiliciés insaturés (S) de formule générale (2)
H₂C=C(R¹)C(O)O-(R¹)_{y}-Si(R²)_{y}(OR⁴)_{3-z}. (2)
partant d'un halogénoalkylsilane de formule générale (3)
X-(R²)_{y}-Si(R³)_{z}(OR⁴)_{3-z} (3),
et d'un sel d'un (méth-)acrylate, qui présente des anions de formule générale (4)
H₂C=C(R¹)C(O)O- (4),
en présence de stabilisateurs,
X représentant un atome d'halogène,
R¹ représentant un atome d'hydrogène ou un radical hydrocarboné linéaire ou ramifié, comprenant 1 à 10 atomes de carbone,
R² représentant un radical hydrocarboné linéaire ou ramifié, comprenant 1 à 40 atomes de carbone, qui peut contenir un ou plusieurs hétéroatomes, choisis parmi les éléments azote, oxygène, soufre ou phosphore,
R³ et R⁴ représentant des radicaux hydrocarbonés linéaires ou ramifiés comprenant 1 à 10 atomes de carbone,
y pouvant valoir 0 ou 1 et
z pouvant valoir 0, 1 ou 2,
au moins la synthèse des composés organosiliciés (S) et la purification par distillation des composés organosiliciés (S) étant réalisées dans une installation technique (A) dont les surfaces en contact avec les composés organosiliciés (S) sont constituées à raison d'au moins 70% d'un matériau exempt de fer, un matériau étant désigné comme exempt de fer lorsqu'il contient moins de 1% en poids de fer,
l'installation technique (A) représentant soit une installation pour un procédé par lots, présentant un volume de remplissage d'au moins 200 1, soit une installation pour un procédé continu à un débit d'au moins 15 l/h.

2. Procédé selon la revendication 1, les surfaces en contact avec le composé organosilicié (S) de l'installation (A) étant constituées à raison d'au moins 99% d'un matériau exempt de fer, un matériau étant désigné comme exempt de fer lorsqu'il contient moins de 0,1% en poids de fer.

3. Procédé selon la revendication 1 ou 2, le matériau exempt de fer étant choisi parmi le verre, l'émail, un matériau synthétique, le graphite, les céramiques d'oxydes, le carbure et le nitrure de silicium.

4. Procédé selon les revendications 1 à 3, R¹ signifiant un atome d'hydrogène ou CH₃.

5. Procédé selon les revendications 1 à 4, R² signifiant un groupe CH₂ ou (CH₂)₃.

6. Procédé selon les revendications 1 à 5, R³ signifiant un radical méthyle ou éthyle.

7. Procédé selon les revendications 1 à 6, R⁴ signifiant un radical méthyle ou éthyle.

8. Procédé selon les revendications 1 à 7, l'installation technique (A) représentant un évaporateur à couche mince, un évaporateur à film tombant ou une installation de distillation instantanée présentant un débit d'au moins 15 l/h.

9. Procédé selon les revendications 1 à 8, l'installation technique (A) représentant soit une installation pour un procédé par lots, présentant un volume de remplissage d'au moins 1000 1, soit une installation pour un procédé continu à un débit d'au moins 100 l/h.

10. Procédé selon les revendications 1 à 9, l'ensemble des étapes de procédé étant réalisé dans des installations (A).
